# EUROPEAN PATENT SPECIFICATION

(11) **EP 1 996 027 B1**
(45) Date of publication and mention of the grant of the patent: **22.08.2012**
(21) Application number: 06706071.5
(22) Date of filing: 20.02.2006
(51) Int. Cl.: A23G 4/06, A23L 1/00, A23L 1/22, A23G 3/54, A23G 4/20

(54) **RESlN ENCAPSULATED FOOD ACID**
HARZVERKAPSELTE NAHRUNGSMITTELSÄURE
ACIDE ALIMENTAIRE ENCAPSULÉ DANS UNE RÉSINE

(43) Date of publication of application: 03.12.2008
(73) Proprietor: Gumlink A/S, 7100 Vejle (DK)
(72) Inventor: THORENGAARD, Bitten, DK-7120 Vejle Øst (DK)
(74) Representative: Guardian IP Consulting I/S
(86) International application number: PCT/DK2006/000100
(87) International publication number: WO 2007/095939

(56) References cited:
- EP-A- 0 372 695
- EP-A2- 0 446 170
- US-A- 4 983 404
- US-A- 5 266 335
- US-A1- 2002 122 842
- US-A1- 2006 003 050

## Description

### FIELD OF THE INVENTION

The present invention relates to confectionary compositions comprising one or more encapsulation delivery systems containing food acids and natural resins. The invention furthermore relates to the encapsulation delivery system as such as well as to methods of preparing the encapsulation delivery system and the confectionary composition.

### TECHNICAL BACKGROUND OF THE INVENTION

Food acids have many important functions in confectionary products. One of these functions is that food acids may enhance the perception of other ingredients in the confectionary product. In particular, if food acids are present together with flavouring agents such as fruit flavouring agents, the perception of the flavouring agents may be enhanced by the presence of food acids.

In relation to various chewable confectionary products, however, the release of food acids and other ingredients such as flavouring agents does not strictly follow the same release profile upon chewing. Usually food acids tend to release rather quickly from the confectionary product upon chewing, while certain other ingredients such as flavouring agents tend to retain in the confectionary product for a longer period. Consequently, if food acids are released from the confectionary product rather quickly, the perception of the other ingredients in the confectionary base may be significantly reduced.

Following this observation several attempts have been suggested in the prior art in order to delay the release of food acids in chewable confectionary products. Delayed release of food acids has traditionally been accomplished by a method of encapsulating the food acids into an encapsulation material, and subsequently incorporating the encapsulation material in the chewable confectionary product as discrete encapsulations for delivery of the food acids upon chewing.

Besides the function of delaying the release of food acids, another advantage of encapsulating food acids is that it may buffer the food acids from other ingredients, and vice versa, which may be helpful in situations where the food acids and the ingredients may interact or react together in a manner that degrades the product if the food acid is not encapsulated.

A limited number of different encapsulation materials, such as polyvinyl acetate or zein, have been suggested In the prior art. Despite the effects reported in the prior art, several problems arise in relation to the applicability of these encapsulation materials In chewable confectionary products such as chewing gums.

EP 0 446 170 A dislcoses a chewing gum containing a food acid delivery system that effects a controlled release of the acid. The food acid is encapsulated in a matrix comprised of an emulsifier and a polyvinyl acetate, the type of which is selected according to the water solubility of said food acid.

US 5,266,335 discloses a a microencapsulated flavoring agent in the form of a spheroidal microcapsule which comprises a core and a coating layer over the core, wherein the microcapsule comprises (A) a core present in an amount up to about 90%, by weight of the microcapsule, which comprises (a) a flavoring agent in an amount from about 20% to about 80%, by weight of the core, and (b) a resin in an amount from about 80% to about 20%, by weight of the core, and (B) a coating layer over the core which comprises in percentages by weight of the coating layer, (a) gelatin in an amount from about 45% to about 49%, (b) gum arabic in an amount from about 45% to about 49%, and (c) glutaraldehyde in an amount from about 2% to about 10%.

Since an encapsulation material has specific properties, the choice of encapsulation material may influence the texture or mouth feel of the final confectionary product. To obtain a desired texture or mouth feel of the final confectionary product, one possibility is to modify the components of the confectionary base system or to modify the content of other confectionary ingredients. Since the encapsulation material forms part of the final confectionary product, the final texture or mouth feel of the confectionary product Is dependent on the choice of encapsulation material. Therefore it is desired to have encapsulation materials suited for the desired texture or mouth feel of the final confectionary product. In addition, it is desired to have encapsulation materials, which require reduced modification of the confectionary base system or other confectionary ingredients in order to obtain the desired texture or mouth feel of the final product.

Similarly, the incorporation of different sensation ingredients such as taste ingredients in the final confectionary product may highly interact with the confectionary base system or the other confectionary ingredients. For example, the addition of certain taste ingredients such as flavors may require modification of the confectionary base system or confectionary ingredients in order to achieve the desired final product. In turn, since the encapsulation material forms part of the final confectionary product, the final properties of the confectionary product are dependent on the choice of encapsulation material. Therefore it is desired to have encapsulation materials suited for the desired properties of the final confectionary product. In addition, it is desired to have encapsulation materials which require reduced modification of the confectionary base system or other confectionary ingredients in order to obtain the desired sensation of the final product.

Furthermore, the encapsulation materials of the prior art limit the opportunity of designing confectionary products having customer acceptable release profiles of food acid. In some applications it may be desired to have a rather delayed release of food acids in the confectionary product while in some other applications it may be desired to have another release profile of food acids dependent on the customer needs. Consequently, there is a need for alternative encapsulation materials, in particular to be able to control the release of food acids in accordance with customer demands.

Additionally, the use of food acids in confectionary products may compromise the shelf life of the confectionary product if special precautions are not taken. Food acids may reduce the stability of the confectionary product, e.g. by altering properties of the confectionary base, the coating (if the confectionery is coated), or of confectionary ingredients such as flavours. Encapsulation of the food acids may reduce the undesired side-effects of acids in confectioneries and prolong the shelf-life. Moreover, there is a need for encapsulation materials that improve the stability of the confectionary products.

### SUMMARY OF THE INVENTION

Accordingly, in one aspect of the present invention there is provided a chewable confectionary composition having modified release. The composition comprises a confectionary base, at least one confectionary ingredient, and one or more encapsulation delivery systems comprising at least one food acid and at least one natural resin, and the one or more encapsulation delivery systems comprise a total amount of natural resin in the range of 20-90% by weight.

### BRIEF DESCRIPTION OF THE FIGURES

In the following some embodiments of the present invention will be described with reference to the figures, wherein
Figure 1 (A) is a schematic illustration of particles of an encapsulation delivery system and
Figure 1(B) is a schematic illustration of a cross section of a confectionary composition comprising particles of an encapsulation delivery system;

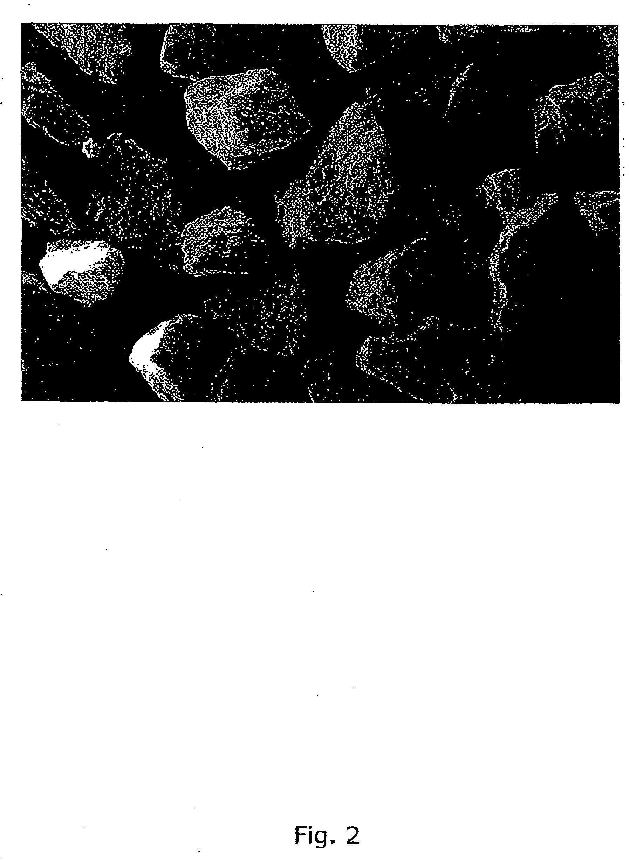

Figure 2 shows a Scanning Electron Microscopy picture of particles of an encapsulation delivery system;
Figure 3 shows the effect of different types of softening system in the encapsulation delivery system, further comprising citric add, Polyterpen resin Piccolyte^{®}C115 and 10% elastomer;
Figure 4 shows the effect of different amounts of elastomer in the encapsulation delivery system, further comprising citric acid, Polyterpen resin Piccolyte^{®}C85 and mono-diglyceride;
Figure 5 shows the effect of different resin types in the encapsulation delivery system, further comprising citric acid and 3-5% Lechitin as a softener;
Figure 6 shows the results of *in vivo* chew out studies of the D- malic acid release. The encapsulation consisted of Piccolyte^{®}C115 and hydrogenated vegetable oil or hydrogenated rapeseed oil;
Figure 7 shows the results of *in vivo* chew out studies of the L- malic acid release. The encapsulation consisted of Piccolyte^{®}C115 and hydrogenated vegetable oil or hydrogenated rapeseed oil;
Figure 8 shows the results of *in vivo* chew out studies of the tataric add release. The encapsulation consisted of Piccolyte^{®}C115 and hydrogenated vegetable oil; and
Figure 9 shows the effect of the particle size of the encapsulation delivery, system, further comprising citric acid, Piccolyte^{®}C115, hydrogenated vegetable oils and acetylated mono-diglycerid.

### DETAILED DESCRIPTION OF THE INVENTION

The present invention is based on the finding that a chewable confectionary composition, which comprises one or more encapsulation delivery systems comprising at least one food acid and at least one natural resin, has a modified release of food add when the confectionary composition is chewed.

An aspect of the invention relates to a chewable confectionary composition having modified release, said composition comprising a confectionary base, at least one confectionary ingredient, and one or more encapsulation delivery systems comprising at least one food add and at least one natural resin, wherein the one or more encapsulation delivery systems comprise a total amount of natural resin in the range of 20-90% by weight.

In a preferred embodiment of the invention, the one or more encapsulation delivery systems comprise an amount of the at least one natural resin In the range of 5-100% by weight, such as In the range of 10-90% by weight, preferably in the range of 20-80% by weight, and even more preferred In the range of 40-60% by weight.

It is envisioned that the one or more encapsulation delivery systems may comprise an amount of the at least one natural resin in the range of 10-100% by weight, such as In the range of 15-100% by weight, preferably in the range of 20-100% by weight, such as in the range of 40-100% by weight, or in the range of 60-100% by weight.

Alternatively, the one or more encapsulation delivery systems may comprise an amount of the at least one natural resin in the range of 5-60% by weight, such as in the range of 5-40% by weight, e.g. in the range of 5-20% by weight.

In a preferred embodiment of the invention, the one or more encapsulation delivery systems comprise a total amount of natural resin in the range of 5-100% by weight, such as in the range of 10-90% by weight, preferably in the range of 20-80% by weight, and even more preferred in the range of 40-60% by weight.

For example that the one or more encapsulation delivery systems may comprise a total amount of natural resin in the range of 10-100% by weight, such as in the range of 15-100% by weight, preferably in the range of 20-100% by weight, such as in the range of 40-100% by weight, or in the range of 60-100% by weight.

Alternatively, the one or more encapsulation delivery systems may comprise a total amount of natural resin in the range of 5-60% by weight, such as in the range of 5-40% by weight, e.g. in the range of 5-20% by weight.

The at least one natural resin comprised in the one or more encapsulation delivery systems may comprise at least one polyterpene resin. Alternatively, the at least one natural resin may comprise at least one hydrogenated resin. Also, the at least one natural resin may comprise at least one polymerised resin. It is also envisioned that the natural resin may comprises mixtures of natural resins, such as at least one hydrogenated resin and at least one polyterpene resin; at least one polymerised resin and at least one polyterpene resin; at least one hydrogenated resin and at least one polymerised resin; or at least one hydrogenated resin, at least one polyterpene resin, and at least one polymerised resin.

Natural resins such as hydrogenated resins or polymerised resins are well-known to the person skilled in the art, and may e.g. be based on abietic acid.

In a preferred embodiment of the invention, the one or more encapsulation delivery systems further comprise at least one elastomer.

In another embodiment of the invention, the one or more encapsulation delivery systems furthermore comprise a softening system.

The softening system may e.g. be present in an amount of 3-10% by weight of the one or more encapsulation delivery systems.

The modified release of the confectionary composition relates to a modified release of food acid when the confectionary composition is chewed. A unique advantage of the one or more encapsulation delivery systems comprising natural resin and food add is that they may release the food acid very slowly,

The encapsulation delivery system may comprise at least one food acid encapsulated in an encapsulation matrix. In some embodiments, the encapsulation matrix may comprise some or all of the food acid. The encapsulation matrix may comprise at least one natural resin. The encapsulation matrix may furthermore comprise components such as a softening system as described herein and/or an elastomer as described herein. In some embodiments, the encapsulation matrix may comprise further materials and ingredients. In particular the encapsulation matrix may comprise further resinous or elastomeric components. In addition, the encapsulation matrix may comprise non-food acid ingredients, which will be known to the person skilled in the art such as for instance active ingredient.

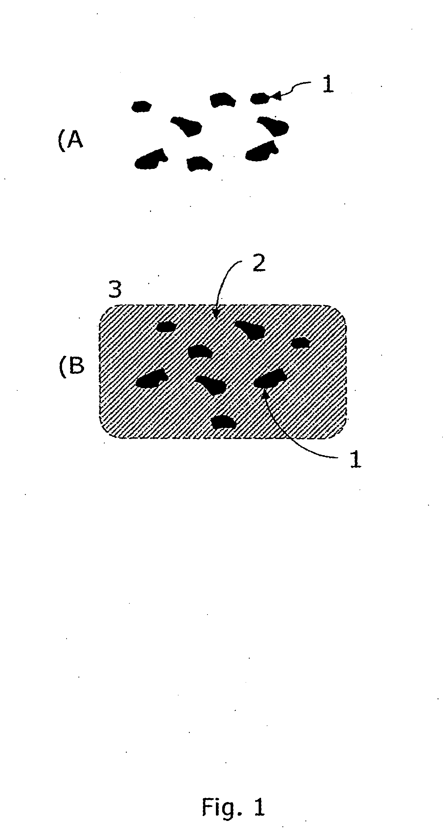

An encapsulation delivery system is typically a particulate system, i.e. containing one or more particles comprising the encapsulation matrix encapsulating the at least one food acid. When present in the confectionary composition, the one or more encapsulation delivery systems may be dispersed as particles throughout the confectionary composition as illustrated in Figure 1.

The confectionary composition according to the present invention has shown to have an increased stability and thus a longer shelf life relative to prior art confectionary compositions. Without being bound by theory, it is believed that the increased stability is due to the presence of the natural resin, and in particular polyterpene resin, which has lower water permeability than prior art encapsulation materials. Without being bound by theory, It is thus believed that the natural resin reduces the migration of food acid from the encapsulation delivery system to the confectionary composition relative to prior art encapsulation materials, and that the reduced migration improves the stability of the confectionary composition.

In an embodiment of the invention, the at least one natural resin has a softening point of at most 200°C, preferably at most 130°, and even more preferably of at most 100°C.

In another embodiment of the invention, the at least one natural resin has a softening point of at least 70°C, such as at least 80°C, preferably of at least 100°C, and even more preferably of at least 110°C, such as at least 120°C.

For example, the at least one natural resin may have a softening point in the range of 70-200°C, preferably in the range of 90-150°C°, and even more preferably in the range of 100-125°C.

In a preferred embodiment of the invention, the at least one polyterpene resin comprises polymerised monoterpenes. It is envisioned that the at least one polyterpene resin may consist essentially of polymerised monoterpenes.

In a further preferred embodiment of the invention, the at least one polyterpene resin comprises polymerised cyclic monoterpenes, and it envisioned that the at least one polyterpene resin may consist essentially of polymerised cyclic monoterpenes.

In a preferred embodiment of the invention, the at least one polyterpene resin comprises polymerised limonene. The at least one polyterpene resin may consist essentially of polymerised limonene.

In a preferred embodiment of the invention the at least one polyterpene resin comprises polymerised alpha-pinene. The at least one polyterpene resin consists essentially of polymerised alpha-pinene.

In a preferred embodiment of the invention, the at least one polyterpene resin comprises polymerised beta-pinene. The at least one polyterpene resin may consist essentially of polymerised beta-pinene.

Also, the at least one polyterpene resin may comprise styrenated polyterpene resin.

The one or more encapsulation delivery systems may comprise a combination of two or more polyterpene resins. For example the encapsulation delivery system may comprise a combination of polymerised alpha-pinene and polymerised beta-pinene; a combination of polymerised alpha-pinene and polymerised limonene; a combination of polymerised alpha-pinene and styrenated polyterpene resin.

In an embodiment of the invention, the at least one polyterpene resin comprises at least 50% by weight polymerised monoterpenes, preferably at least 75% by weight polymerised monoterpenes, even more preferably at least 95% by weight polymerised monoterpenes.

In another embodiment of the invention, the at least one polyterpene resin comprises at least 50% by weight polymerised cyclic monoterpenes, preferably at least 75% by weight polymerised cyclic monoterpenes, even more preferably at least 95% by weight polymerised cyclic monoterpenes.

In some embodiments, the elastomer may be or include one or more of the following: butyl rubber, polyisobutylen, isobutylene-isoprene copolymer, styrene-butadiene, copolymer, styrene-isoprene-styrene copolymer, polyisoprene, polyethylene, vinyl acetate-vinyl laurate copolymer, and combinations thereof.

Useful synthetic elastomers include, but are not limited to, synthetic elastomers listed in U.S. Food and Drug Administration, CFR, Title 21, Section 172,615, the Masticatory Substances, Synthetic, the contents of which are incorporated herein by reference for all purposes) such as polyisobutylene. e.g. having a gas pressure chromatography (GPC) average molecular weight in the range of about 10,000 to 1,000,000 including the range of 50,000 to 80,000, isobutylene-isoprene copolymer (butyl elastomer), styrene- butadiene copolymers e.g. having styrene-butadiene ratios of about 1:3 to 3:1, polyisoprene, polyethylene, vinyl acetate-vinyl laurate copolymer e.g. having a vinyl laurate content of about 5 to 50% by weight such as 10 to 45% by weight of the copolymer, and combinations hereof.

It is possible to combine a synthetic elastomer having a high molecular weight and a synthetic elastomer having a low molecular weight elastomer. Presently preferred combinations of synthetic elastomers include, but are not limited to, polyisobutylene and,styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

The presently preferred elastomers are butyl rubber and polyisobutylen, which e.g. may be used separately or in combination in the one or more encapsulation delivery systems.

In accordance with the present invention the chewable confectionary composition comprises at least one confectionary ingredient.

In a useful embodiment, the at least one confectionary ingredient of the confectionary composition may comprise at least one food acid.

The at least one further food acid of the confectionary composition may be the same as the at least one food acid of the at least one encapsulation delivery system. Alternatively, the at least one food acid of the confectionary composition may be different from the at least one food acid of the at least one encapsulation delivery system.

In the context of the present invention, the term "food acid" pertains to acids that are safe to use in food products. The food acids are typically mono-, di-, or tri-carboxylic acids. The food acid, that is, the at least one food acid may e.g. be selected from the group consisting of citric acid, tartaric acid, malic acid, fumaric acid, succinic acid, ascorbic acid, adipic acid and lactic acid, and mixtures thereof. Phosphoric acid may also be a food acid according to the present invention.

The at least one food acid will typically be in a particulate form and may for example comprise a ground food acid.

In a preferred embodiment of the invention, the average particle size of the at least one food acid is in the range of 0.1-100 µm, preferably in the range of 1-50 µm.

The one or more encapsulation delivery systems may comprise an amount of polyterpene resin in the range of 5-100% by weight, preferably in the range of 20-80% by weight, and even more preferred in the range of 40-60% by weight.

The one or more encapsulation delivery systems may comprise an amount of the at least one polyterpene resin in the range of 5-100% by weight, preferably in the range of 20-80% by weight, and even more preferred in the range of 40-60% by weight.

The one or more encapsulation delivery systems may contain a high content of polyterpene resin, e.g. an amount of polyterpene resin in the range of 50-100% by weight of the encapsulation delivery system, e.g. in the range of 60-95% by weight, such as in the range of 65-80% by weight.

The one or more encapsulation delivery systems may also contain an amount of polyterpene resin in the range of 5-60% by weight of the encapsulation delivery system, e.g. in the range of 15-50% by weight, such as in the range of 25-40% by weight.

The one or more encapsulation delivery systems may e.g. comprise an amount of the at least one elastomer in the range of 0 -30% by weight, preferably in the range of 5-20% by weight, even more preferred in the range of 7-15% by weight.

The one or more encapsulation delivery systems could for example comprise an amount of the at least one food acid in the range of 1-50% by weight, preferably in the range of 5-45% by weight, even more preferred in the range in the range of 20-40% by weight.

Normally, the confectionary composition comprises an amount of the at least one food acid in the range of 0.1-10% by weight, preferably in the range of 0.5-5% by weight, even more preferred in the range in the range of 1-3% by weight.

When the weight percentage of a component of the confectionary composition is described herein, the weight percentage is related to the uncoated confectionary composition unless stated otherwise.

In an embodiment of the invention, the confectionary composition comprises a total amount of food acid in the range of 0.1-10% by weight, preferably in the range of 0.5-5% by weight, even more preferred in the range in the range of 1-3% by weight.

The confectionary composition may comprise an amount of the one or more encapsulation delivery systems in the range of 0.5-20% by weight, preferably in the range of 1-10% by weight, even more preferred in the range of 2-6% by weight.

A range of different particle sizes of the one or more encapsulation delivery systems are envisioned. However, the average particle size of the one or more encapsulation delivery systems is normally in the range of 100-2000 µm, preferably in the range of 200-1000 µm, and even more preferred in the range of 500-1000 µm. The size of a particle is measured as the length of the longest dimension of the particle.

The one or more encapsulation delivery systems may comprise polyvinyl acetate. In some embodiments, polyvinyl acetate may e.g. have a GPC average molecular weight in the range of 2,000 to 90,000 such as the range of 3,000 to 80,000 including the range of 30,000 to 50,000.

Natural resins comprised in the encapsulation delivery system may include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins.

In preferred embodiment of the invention, the confectionary composition comprises two or more encapsulation delivery systems, such as three or more encapsulation delivery systems. The different encapsulation delivery systems preferably have different release characteristics.

In one embodiment, the encapsulation delivery systems further comprise at least one encapsulation delivery system comprising at least one food acid and at least one polyvinyl acetate.

For example, the encapsulation delivery systems may comprise at least a first encapsulation delivery system comprising the at least one polyterpene resin and at least a second encapsulation delivery system comprising the at least one polyvinyl acetate.

Also, the encapsulation delivery systems may comprise at least a first encapsulation delivery system comprising the at least one hydrogenated resin and at least a second encapsulation delivery system comprising the at least one polyvinyl acetate.

Alternatively, the encapsulation delivery systems may comprise at least a first encapsulation delivery system comprising the at least one polymerised resin and at least a second encapsulation delivery system comprising the at least one polyvinyl acetate. ,

Useful encapsulation delivery systems comprising polyvinyl acetate are disclosed in the U.S, patent application with the publication No. 2005/0 260 266, the contents of which are Incorporated herein by reference for all purposed.

It is preferred that said encapsulation delivery systems, if more than one, provide different release properties.

The encapsulation delivery systems may comprise at least one fast release encapsulation delivery system releasing 80-100% by weight of its food acid within the first 6 minutes of chewing the confectionary composition.

Alternatively, or as a supplement, the encapsulation delivery systems may also comprise at least one delayed release encapsulation delivery system releasing 60-80% by weight of Its food acid within the first 6 minutes of chewing the confectionary composition.

Alternatively, or as a supplement, the encapsulation delivery systems may also comprise at least one slow release encapsulation delivery system releasing 3D-60% by weight of its food add within the first 6 minutes of chewing the confectionary composition.

In a preferred embodiment of the invention, at least one encapsulation delivery system comprises at least one food acid and at least one natural resin, said at least one encapsulation delivery system releasing 5-60% by weight of its food acid within the first 6 minutes of chewing the confectionary composition. For example, the at least one encapsulation delivery system may release 10-60% by weight of its food acid within the first 6 minutes of chewing the confectionary composition, such as 15-60% by weight, 20-60% by weight, 25-60% by weight, 30-60% by weight, 35-60% by weight, 40-60% by weight, or 50-60% by weight.

Also, the at least one encapsulation delivery system may release 5-55% by weight of its food acid within the first 6 minutes of chewing the confectionary composition, such as 5-50% by weight, 5-45% by weight, 5-40% by weight, 5-35% by weight, 5-30% by weight, 5-25% by weight, 5-20% by weight, or 5-15% by weight.

The softening system comprised in the one or more encapsulation delivery systems may comprise an emulsifier.

A number of different emulsifiers may be used in the encapsulation delivery systems. For example, anionic, cationic, amphoteric or non-ionic emulsifiers can be used. Suitable emulsifiers include lecithins, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

The presently preferred emulsifiers comprised in the encapsulation delivery systems are selected from the group consisting of mono-diglyderide, lecithin, and triacetin.

The softening system comprised in the one or more encapsulation delivery systems may comprise a wax.

The wax may be selected from the group consisting paraffin wax, beeswax, vegetable wax, candelilla wax, canauba wax, petroleum waxes, and the like, and mixtures thereof.

In a preferred embodiment of the invention, the wax has a high melting point e.g. a melting point in the range 70-100°C. Preferably, the wax is a microcrystalline wax.

The softening system comprised in the one or more encapsulation delivery systems may comprise a fat.

The fat is preferably a high melting fat, e.g. having a melting point in the range 30-100°C.

The fat may e.g. include partially or fully hydrogenated vegetable or animal fats, such as partially or fully hydrogenated coconut oil, partially or fully hydrogenated palm oil, partially or fully hydrogenated palm kernel oil, partially or fully hydrogenated rapeseed oil, partially or fully hydrogenated castor oil, partially or fully hydrogenated maize oil, partially or fully hydrogenated cottonseed oil, partially or fully hydrogenated olive oil, partially or fully hydrogenated sunflower oil, partially or fully hydrogenated safflower oil, partially or fully hydrogenated sesame oil, partially or fully hydrogenated soybean oil, beef tallow, partially or fully hydrogenated beef tallow, lard, and partially or fully hydrogenated lard, and any mixture thereof and any derivative thereof.

The one or more encapsulation delivery systems may furthermore comprise a detackifier.

The detackifier may e.g. be selected from the group consisting of talc powder, calcium carbonate, starches, such as corn starch; and mineral fillers, such as titanium dioxide.

The confectionary composition may be a chewing gum, a toffee, a caramel, a gummy candy, or a jelly candy, and combinations thereof. In the present context, the confectionary compositions are not limited to these specific compositions.

In a preferred embodiment of the invention, the confectionary composition is a chewing gum.

Chewy candies include caramel, taffies and toffee type candies. These are dairy based products and frequently contain fresh cream, but also may be made from skim or fresh whole milk, unsweetened evaporated milk, sweetened condensed milk or reconstituted milk solids. Toffees are basically high-cooked caramels.

Gummy and jelly candies typically are prepared from a boiled mixture of mixed sugars which is then blended with a gelling agent and processed into any of a wide range of shapes by depositing into starch moulds. A number of gelling agents may be utilized among which are starch, gelatin, pectin, gum arabic and agar. The foregoing is known as a Mogul process. The candies can also be extruded or simply cast onto a slab or cast into rubber moulds. The pieces are then held to set and dry. For a general description of this type of process, see Lees and Jackson; Sugar Confectionary and Chocolate Manufacture; 1973 (ISBN 0249 44120 9); pages 226-268, which is incorporated by reference herein for all uses.

Lozenges comprise a sugar dough which as been flavoured, cut to shape and subsequently dried to remove added water. The dough normally contains a mucilage, or binder, usually a solution of gum and gelatines, which is added to assist in retention of shape.

These candies are typically prepared employing a simple process which involves mixing the gum and gelatine mucilage with powdered sugar and flavouring agent, followed by air drying.

Liquorice is a confection manufactured from a paste, which usually includes treacle, wheat flour, liquorice extract and caramel, along with many other optional ingredients. Treacle is a dark, viscous liquid with a distinctive bitter back-taste. It comprises cane molasses to which sugar syrups have been added. The wheat flour acts as a bulking and gelling agent. Licorice is typically prepared by pre-mixing the ingredients and then cooking at 120° C.-145° C in a cooker such as a scrape surface heat exchanger. The cooked licorice may then be extruded as ropes and cut into cylinders.

Panned candies are typically cold-processed in unheated or moderately heated revolving pans. Included in this category are jelly eggs, jelly beans, marshmallows and coated chewing gums.

The confectionary composition may furthermore comprise a coating, e.g. a hard coating, a soft coating, or a film coating.

Typically the confectionary composition comprises the coating in an amount in the range of 1-80% by weight, such as in an amount in the range of 10-50%, or 15-45% by weight of the coated confectionary composition. Preferably, the confectionary composition comprises the coating in an amount in the range of 20-40% by weight of the coated confectionary composition.

The coating may be a hard coating, which term is used in the conventional meaning of that term including sugar coatings and sugar-free (or sugarless) coatings and combinations thereof. The objects of hard coating are to obtain a sweet, crunchy layer, which is appreciated by the consumer, and to protect the mixture for various reasons. In a typical process of providing the mixture with a protective sugar coating the confectionary centers are successively treated in suitable coating equipment with aqueous solutions of crystallizable sugar such as sucrose or dextrose, which, depending on the stage of coating reached, may contain other functional ingredients, e.g. fillers, colours, etc. In the present context, the sugar coating may contain further functional or active compounds including flavouring agents, pharmaceutically active compounds and/or polymer degrading substances.

In the production of confectionary compositions it may, however, be preferred to replace the cariogenic sugar compounds in the coating by other, preferably crystallizable, sweetening compounds that do not have a cariogenic effect. In the art such coating is generally referred to as sugarless or sugar-free coatings. Presently preferred non- cariogenic hard coating substances include polyols, e.g. sorbitol, maltitol, mannitol, xylitol, erythritol, lactitol, isomalt and tagatose which are obtained by industrial methods by hydrogenation of D-glucose, maltose, fructose or levulose, xylose, erythrose, lactose, isomaltulose and D-galactose, respectively.

In a typical hard coating process, a syrup containing crystallizable sugar and/or polyol is applied onto the confectionary compositions and the water it contains is evaporated off by blowing with warm, dry air. This cycle may be repeated several times, typically 10 to 80 times, in order to reach the swelling required. The term "swelling" refers to the increase in weight of the products, as considered at the end of the coating operation by comparison with the beginning, and in relation to the final weight of the coated confectionary composition.

Coated confectionaries include jelly eggs, jelly beans, marshmallows, and coated chewing gums.

Alternatively, the coating may be a soft coating. Such a soft coating is applied using conventional methods and may advantageously consist of a mixture of a sugar or any of the above non-cariogenic, sugar-less sweetening compounds and a starch hydrolysate.

The coating may be a film coating. The film coating may be obtained by subjecting the mixture to a film coating process and which therefore comprises one or more film-forming polymeric agents and optionally one or more auxiliary compounds, e.g. plasticizers, pigments and opacifiers. A film coating is a thin polymer-based coating applied to a confectionary composition of any of the above forms. The thickness of such a film coating is usually between 20 and 100 µm. Generally, the film coating is obtained by passing the confectionary composition through a spray zone with atomized droplets of the coating materials in a suitable aqueous or organic solvent vehicle, after which the material adhering to the confectionary composition is dried before the next portion of coating is received. This cycle is repeated until the coating is complete.

In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers also referred to, as functional polymers are polymers that, In addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers includes: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments of the invention, the film-coating layer of the confectionary composition comprise a plasticizing agent having the capacity to alter the physical properties of a polymer to render it more useful in performing its function as a film forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity.

In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer(s) and plasticizing agent(s) for the film coating of the mixture is made with due consideration for achieving the best possible barrier properties of the coating in respect of dissolution and diffusion across the film of moisture and gasses.

The film coating of the mixture may also contain one or more colourants or opacifiers. In addition to providing a desired colour hue, such agents may contribute to protecting the confectionary composition against pre-chewing reactions, in particular by forming a barrier against moisture and gasses. Suitable colourants/opacifiers include organic dyes and their lakes, inorganic colouring agents, e.g. titanium oxide and natural colours such as e.g. beta-carotene.

Additionally, film coatings may contain one or several auxiliary substances such as flavouring agents and waxes or saccharide compounds such as polydextrose, dextrins including maltodextrin, lactose, modified starch, a protein such as gelatine or zein, a vegetable gum and any combination thereof.

The coating, in general, typically comprises one or more layers. For example the number of layers of the coating may be in the range of 1-100 layers, such as 3-75 layers, 10-60 layers, and 20-40 layers.

The coating may comprise a wax layer. In an embodiment of the invention, the outermost layer of the coating is a wax layer.

In one embodiment, the chewing gum does not comprise a coating.

In a preferred embodiment of the invention, the confectionary composition is a chewing gum. A chewing gum may comprise a gum base.

The gum base typically comprises an elastomer, Also, the gum base typically comprises a resin.

The gum base of the mixture normally comprises an elastomer. Useful synthetic elastomers include, but are not limited to, synthetic elastomers listed in U.S. Food and Drug Administration, CFR, Title 21, Section 172,615, the Masticatory Substances, Synthetic, the contents of which are incorporated herein by reference for all purposes) such as polyisobutylene. e.g. having a gas pressure chromatography (GPC) average molecular weight In the range of about 10,000 to 1,000,000 including the range of 50,000 to 80,000, isobutylene-isoprene copolymer (butyl elastomer), styrene- butadiene copolymers e.g. having styrene-butadiene ratios of about 1:3 to 3:1, polyisoprene, polyethylene, vinyl acetate-vinyl laurate copolymer e.g. having a vinyl laurate content of about 5 to 50% by weight such as 10 to 45% by weight of the copolymer, and combinations hereof.

It is possible to combine a synthetic elastomer having a high molecular weight and a synthetic elastomer having a low molecular weight elastomer in a gum base. Presently preferred combinations of synthetic elastomers include, but are not limited to, potylsobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Typically, the gum base comprises at least one elastomer in an amount in the range of 3-80% by weight of the gum base, preferably in an amount in the range of 4-60% by weight of the gum base, and even more preferred in the range of 5-40% by weight of the gum base, such as in the range of 8-20% by weight of the gum base.

The gum base may comprise one or more resins contributing to obtain the desired masticatory properties and acting as plasticizers for the elastomers of the gum base. In the present context, useful resins include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins, polyvinyl acetate, e.g. having a GPC average molecular weight in the range of 2,000 to 90,000 such as the range of 3,000 to 80,000 including the range of 30,000 to 50,000, where the higher molecular weight polyvinyl acetates are typically used in bubble gum base,. Other useful resinous compounds include synthetic resins such as terpene resins derived from alpha-pinene, beta-pinene, and/or d-limonene, natural terpene resins; and any suitable combinations of the foregoing. The choice of resins will vary depending on the specific application, and on the type of elastomer(s) being used.

Usually, the gum base comprises at least one resin in an amount in the range of 10-90% by weight of the gum base, preferably in the range of 20-80% by weight, even more preferred in the range of 30-70% by weight of the gum base, such as in the range of 40-60% by weight of the gum base.

The gum base may furthermore comprise a wax. When a wax is present in the gum base, it softens the polymeric elastomer mixture and improves the elasticity of the gum base.
The waxes employed will have a melting point below about 60°C, and preferably between about 45°C and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, canauba wax, most petroleum waxes, and the like, and mixtures thereof.

In addition to the components set out above, the gum base may include a variety of other components, such as components selected from elastomer solvents, emulsifiers, plasticizers, fillers, and mixtures thereof.

The gum base may also include emulsifiers, which aid in dispersing any immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 1%, by weight of the gum base.

The gum base may also include plasticizers or softeners to provide a variety of desirable textures and consistency properties. Because of the low molecular weight of these components, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

Although softeners may be present to modify the texture of the gum composition, they may be present in reduced amounts as compared to typical gum compositions. For example, they may be present from about 0.5 to about 10% by weight based on the total weight of the composition, or they may not be present in the composition, since a surfactant active can act as a softener.

The gum base of this invention may also include effective amounts of bulking agents such as mineral adjuvants, which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. Preferably the amount of filler, when used, will be present in an amount from about 15% to about 40%, and desirably from about 20% to about 30%, by weight of the gum base.

In an embodiment of the invention, the composition comprises an amount of gum base in the range of 10-90% by weight, preferably in the range of 20-70% by weight, even more preferred in the range in the range of 40-60 by weight.

The at least one confectionary ingredient of the confectionary composition is selected from the group consisting of a bulk sweetener, a high intensity sweetener, a flavouring agent, a cooling agent, a warming agent, a softener, an emulsifier, a colouring agent, a binding agent, an acidulant, a filler, an antioxidant.

The flavouring agents are important for the organoleptic properties of the confectionary composition. Acids may prolong the perceived flavour of flavouring agents and in particular of fruit flavouring agents. The slow release of food acid, which may be obtained when using the one or more encapsulation delivery systems of the present invention in a confectionary composition, appears to be particularly useful for prolonging the flavour sensation of flavouring agents, such as fruit flavouring agents.

Thus, in a preferred embodiment of the invention, the confectionary composition comprises a flavouring agent, e.g. a fruit flavouring agent.

The flavouring agents which may be used include those flavouring agents known to the skilled artisan, such as natural and artificial flavouring agents. These flavouring agents may be chosen from synthetic flavour oils and flavouring aromatics and/or oils, oleoresins and extracts derived from plants, leaves, flowers, fruits, and so forth, and combinations thereof.

Also useful flavouring agents are artificial, natural and synthetic fruit flavours such as vanilla, and citrus oils including lemon, orange, lime, grapefruit, and fruit essences :in_{d}uding apple, pear, peach, grape, strawberry, raspberry, cherry, plum, pineapple, apricot and so forth. These flavouring agents may be used in liquid or solid form and may be used individually or in admixture.

Other useful flavouring agents include aldehydes and esters such as cinnamyl acetate, cinnamaldehyde, citral diethylacetal, dihydrocarvyl acetate, eugenyl formate, p-methylamisol, and so forth may be used. Generally any flavouring agent or food additive such as those described in Chemicals Used in Food Processing, publication 1274, pages 63-258, by the National Academy of Sciences, may be used. This publication is incorporated herein by reference.

Further examples of aldehyde flavouring agents include but are not limited to acetaldehyde (apple), benzaldehyde (cherry, almond), , citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavours), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraidehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavouring agent may be employed in either liquid form and/or dried form. When employed in the latter form, suitable drying means such as spray drying the oil may be used. Alternatively, the flavouring agent may be absorbed onto water soluble materials, such as cellulose, starch, sugar, maltodextrin, gum arabic and so forth or may be encapsulated. The actual techniques for preparing such dried forms are well-known.

In some embodiments, the flavouring agents may be used in many distinct physical forms well-known in the art to provide an initial burst of flavour and/or a prolonged sensation of flavour. Without being limited thereto, such physical forms include free forms, such as spray dried, powdered, beaded forms, encapsulated forms, and mixtures thereof.

The amount of flavouring agent employed herein may be a matter of preference subject to such factors as the type of final chewing gum composition, the individual flavour, the gum base employed, and the strength of flavour desired. Thus, the amount of flavouring may be varied in order to obtain the result desired in the final product and such variations are within the capabilities of those skilled in the art without the need for undue experimentation. In chewing gum compositions, the flavouring agent is generally present in amounts from about 0.02% to about 5%, and more specifically from about 0.1% to about 2%, and even more specifically, from about 0.8% to about 1.8%, by weight of the chewing gum composition.

Colouring agents may be used in amounts effective to produce the desired colour. The colouring agents may include pigments, which may be incorporated In amounts up to about 6%, by weight of the gum composition. For example, titanium dioxide may be incorporated in amounts up to about 2%, and preferably less than about 1%, by weight of the gum composition. The colourants may also include natural food colours and dyes suitable for food, drug and cosmetic applications. These colourants are known as F.D.& C. dyes and lakes. The materials acceptable for the foregoing uses are preferably water-soluble. Illustrative nonlimiting examples include the indigoid dye known as F.D.& C. Blue No. 2, which is the disodium salt of 5,5-indigotindisulfonic acid. Similarly, the dye known as F.D.& C. Green No. 1 comprises a triphenylmethane dye and is the monosodium salt of 4-[4-(N-ethyl-p-sulfoniumbenzylamino) diphenylmethylene]-[1-(N-ethyl-N-p-- sulfoniumbenzyl)-delta-2,5-cyclohexadieneimine]. A full recitation of all F.D.& C. colourants and their corresponding chemical structures may be found in the Kirk-Othmer Encyclopedia of Chemical Technology, 3rd Edition, in volume 5 at pages 857-884, which text is incorporated herein by reference.

The at least one confectionary ingredient may comprise a bulk sweetener.

The bulk sweetener may be selected from the group consisting of monosaccharides, disaccharides, polysaccharides, sugar alcohols, and mixtures thereof; randomly bonded glucose polymers such as those polymers distributed under the tradename POLYDEXTROSE by Pfizer, Inc., Groton, Conn.; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; and hydrogenated disaccharides.

For example the bulk sweetener may be selected from the group consisting of dextrose, sucrose, lactose, hydrogenated starch hydrolysates, xylitol, mannitol, sorbitol, maltitol, isomalt, erythritol, lactitol, and maltodextrin.

The confectionary composition normally comprises the bulk sweetener in an amount in the range of 5-95% by weight, such as in an amount in the range of 10-80% by weight.

The confectionary composition may comprise the bulk sweetener in an amount in the range of 30-70% by weight, such as in the range of 40-55% by weight, or in the range of 30-50% by weight.

The high intensity sweetener comprised by said at least one confectionary ingredient may be selected from the group consisting of sucralose, neotame, NEPH, aspartame, salts of acesulfame, alitame, saccharin and its salts, cyclamic acid and its salts, glycyrrhizin, dihydrochalcones, thaumatin, monellin, stevioside, and combinations thereof.

With respect to cooling agents, a variety of well known cooling agents may be employed. For example, among the useful cooling agents are included menthol, xylitol, menthane, menthone, menthyl acetate, menthyl salicylate, N,2,3-trimethyl-2-isopropyl butanamide (WS-23), N-ethyl-p-menthane-3-carboxamide (WS-3), menthyl succinate, 3,1-menthoxypropane 1,2-diol, among others. These and other suitable cooling agents are further described in the following U.S. patents, all of which are incorporated in their entirety by reference hereto: U.S. Pat. Nos. 4,230,688 and 4,032,661 to Rowsell et al.; 4,459,425 to Amano et al.; 4,136,163 to Watson et al.; and 5,266,592 to Grub et al. The cooling agents are typically present in amounts of about 0.001 to about 10% by weight of the total confectionary composition.

Warming components may be selected from a wide variety of compounds known to provide the sensory signal of warming to the user. These compounds offer the perceived sensation of warmth, particularly in the oral cavity, and often enhance the perception of flavours, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethyleather, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, and combinations thereof.

In an embodiment of the invention, the confectionary composition comprises a center fillling.

The confectionary composition may be processed into in a number of different shapes such as a stick, a core, a tablet, a slab, a bead, a pellet, a tape, or a ball.

A confectionary composition according to the present invention, has typically a weight in the range of 0.1-100 g, such as in the range of 0.5-5 g or in the range of 0.75-2.5 g, preferably in the range of 0.8-2 g, and even more preferred in the range of 1-1.5 g. Center filled confectionary composition normally have weights in the range of 0.5-5 g, preferably In the range of 1-4 g, and even more preferred in the range of 2-3 g. Typical weights for bead shaped confectionary composition are In the range of 0.1-0.6 g, preferably in the range of 0.2-0.5 g, and even more preferred in the range of 0.3-0.4 g.

It should be understood that any embodiments and/or feature discussed above in connection with the chewable confectionary composition according to the Invention apply by analogy to the below aspects of the present invention.

As metioned herein, the encapsulation delivery system comprises at least one food acid and at least one natural resin. The natural resin of the confectionary encapsulation delivery system may comprise at least one polyterpene resin, at least one hydrogenated resin, or at least one polymerised resin, or mixtures thereof.

The encapsulation delivery system may furthermore comprise at least one elastomer.

Additionally, the encapsulation delivery system may furthermore comprise at least one a softening system.

The softening system is typically present in an amount of 3-10% by weight of the encapsulation delivery system.

The at least one food acid of the encapsulation delivery system may e.g. be selected from the group consisting of citric acid, tartaric acid, malic acid, fumaric acid, ascorbic acid, adipic acid and lactic acid, and mixtures thereof.

The average particle size of the at least one food add of the encapsulation delivery system is typically In the range of 0.1-100 µm, preferably In the range of 1-50 µm.

In an embodiment of the invention, the encapsulation delivery system comprises an amount of the at least one food acid in the range of 1-50% by weight, preferably In the range of 5-45% by weight, even more preferred in the range in the range of 20-40% by weight.

The avearge particle size of the encapsulation delivery system typically In the range of 100-2000 µm, preferably in the range of 200-1000 µm, and even more preferred in the range of 500-1000 µm.

The confectionary composition may eg. be prepared by a method comprising the step of mixing one or more encapsulation delivery systems with a confectionary base. Such confectionary compositions may be a chewing gum, a toffee, a caramel, a gummy candy, or a jelly candy.

The encapsulation delivery system may be prepared by first melting the natural reson of the encapsulation delivery system, e.g. in a high shear mixer, A softening system may then be added to the molten polymer. The food add may then be added to the resulting mixture and mixed, e.g. under high shear.

The resulting filled polymer melt is then cooled and formed to a suitable size, e.g. by means such as chopping, pulverizing, milling or grinding. The encapsulation delivery system may be stored in an air tight container with low humidity until it is to be employed in a confectionary composition.

In other words, the method comprising the step of:
a) mixing the at least one food acid with at least one natural resin,
b) converting the mixture of step a) to particles, thus obtaining the encapsulation delivery system.

Step a) may also involve mixing components such as a softening system and/or at least one elastomer with the at least one food acid and the at least one natural resin. ,

The mixing of step a) is preferably performed at or above the softening point of the at least one natural resin, e.g. 0-10°C above the softening point of the at least one natural resin.

Step b) typically comprises a step of cooling the mixture of step a) prior to the converting the mixture into particles. The cooling may e.g. be performed by means of air, gas or liquid.

The method of preparing a particulate encapsulation delivery system may furthermore comprise an extrusion process and/or a cutting process as described in U.S. patent No. 5,789,002, the contents of which are incorporated herein by reference for all purposed.

Other methods of preparing an encapsulation delivery system may be found in the U.S. patent application with the publication No. 2005/0 260 266, the contents of which are incorporated herein by reference for all purposed.

The following examples are included to demonstrate particular embodiments of the invention. However, those of skill in the art should, in view of the present disclosure, appreciate that many changes can be made in the specific embodiments which are disclosed and still obtain a like or similar result without departing from the spirit and scope of the invention. The following examples are offered by way of illustration and are not intended to limit the invention in any way. The invention will now be described in further details in the following non-limiting examples.

### EXAMPLES

The object of the studies described in the following examples was to test different encapsulation delivery systems comprising combinations of different food acids, encapsulation materials, softening systems, elastomers and other ingredients.

Furthermore, it was an object of these studies to test a simple chewing gum composition comprising different encapsulation delivery systems and different particle sizes of the encapsulation delivery systems.

### EXAMPLE 1

### Preparation of encapsulation delivery systems

For the preparation of the different encapsulation delivery systems, the following materials were used:

**Table 1.1: Softening systems**

| **Raw material name** | **Melting point** |
|---|---|
| Lecithin Solid | - |
| Sunflower Lecithin | Liquid |
| Mono-diglyceride | 60 - 65°C |
| Glyceryl triacetat | Liquid |
| Microcrystalline wax A | 72 - 84°C |
| Microcrystalline wax B | 88 - 102°C |
| Hydrogenated Vegetable oils | 69 - 73°C |
| Partially Hydrogenated vegetable oils | 42 - 50°C |
| Hydrogenated rapeseed oil | 62 - 65°C |
| Acetylated mono-diglyceride | 38 - 41°C |

Encapsulation materials:
- PVA with a low Mw, 10,000 - 15,000
- PVA with a high Mw, 50,000 - 70,000
- Piccolyte^{®} C 85, Delta - Limonene Sp. 82 - 88°C
- Piccolyte^{®} C115, Delta - Limonene Sp. 112 - 118°C
- Piccolyte^{®} C135, Delta - Umonene Sp. 133 - 138°C
- Piccolyte^{®} A115, Alpha-pinen Sp. 112 - 118°C
- Piccolyte^{®} HM115, Styrenated polyterpen resin Sp. 112 - 118
- Piccolyte^{®} S125, Beta - pinen Sp. 122 - 128
- Polymerized resin, Glycerol ester of polymerized gum rosin, Sp. 95 - 105
- Hydrogenerized resin, Glycerol ester of partially hydrogenated gum rosin Sp. 77 - 81

Furthermore, in all encapsulation delivery systems, butyl rubber was used as the elastomer and talc powder was used as anti-caking agent.

The following three food acids were used in the encapsulation delivery system: citric acid, malic acid or tartaric acid.

The encapsulation delivery systems were prepared by first adding elastomer and talc powder to a Z-blade mixer at 120°C. Subsequently, polyterpene resin (Piccolyte^{®} C115) was added slowly, to ensure that the elastomer was mixed thoroughly. Following this, the softening system was added to the mixer, and finally the ground food acid was added. The admixture was taken out of the kneading kettle and by rolling and scoring divided until small pieces. The admixture was stored at room temperature until grinding.

Before grinding, the small pieces were cooled down with carbon dioxide for at least 2 hours.

The small pieces were grinded through a 3 mm sieve in the granulator. During the grinding process, a little dry ice was added. The carbon dioxide was added to avoid that the pieces became hot and sticky during the grinding process.

Tables 1.2 - 1.4 below show the combinations of food acids, encapsulation materials, softening systems, elastomers and other ingredients in around 30 different encapsulation delivery systems.

**Table 1.2: Encapsulation delivery system**

| **Batch no.** | **122** | **155** | **156** | **164** | **165** | **166** | **169** | **175** | **176** |
|---|---|---|---|---|---|---|---|---|---|
| **Food acid** | | | | | | | | | |
| Citric acid | 30 | 30 | 30 | 30 | 30 | 30 | 30 | 30 | 30 |

| **Encapsulation Material Resin** | | | | | | | | | |
|---|---|---|---|---|---|---|---|---|---|
| PVA (low Mw) | 60 | - | - | - | - | - | - | - | - |
| PVA (high Mw) | - | - | - | - | - | - | - | - | 50 |
| Piccolyte^{®} C85 | | 40 | 45 | 50 | 45 | 40 | 35 | - | - |
| Polymerized Resin | - | - | - | - | - | - | - | 50 | - |

| **Softening system** | | | | | | | | | |
|---|---|---|---|---|---|---|---|---|---|
| Lecithin (Sunflower) | - | - | 5 | - | - | - | - | 3 | 3 |
| Mono-diglyceride | 10 | 10 | - | 10 | 10 | 10 | 10 | - | - |

| **Elastomer** | | | | | | | | | |
|---|---|---|---|---|---|---|---|---|---|
| Butyl | - | 10 | 10 | 5 | 10 | 15 | 20 | 13 | 13 |
| Polyisobutylen | - | 5 | 5 | - | - | - | - | - | - |

| **Other** | | | | | | | | | |
|---|---|---|---|---|---|---|---|---|---|
| Talc | - | 5 | 5 | 5 | 5 | 5 | 5 | 5 | 5 |

**Table 1.3: Encapsulation delivery system**

| **Batch no.** | **211** | **212** | **213** | **214** | **215** | **216** | **224** | **225** | **226** |
|---|---|---|---|---|---|---|---|---|---|
| **Food acid** | | | | | | | | | |
| Citric acid | 30 | 30 | 30 | 30 | 30 | 30 | 30 | 30 | 30 |

| **Encapsulation Material Resin** | | | | | | | | | |
|---|---|---|---|---|---|---|---|---|---|
| Piccolyte^{®} C115 | 50 | 52 | 45 | 50 | 50 | 50 | 50 | 50 | 50 |

| **Softening system** | | | | | | | | | |
|---|---|---|---|---|---|---|---|---|---|
| Soya Lecithin Solid | 5 | - | - | - | - | - | - | - | - |
| Lecithin (Sunflower) | - | 3 | - | - | - | - | - | - | - |
| Mono-diglyceride | - | - | 10 | - | - | - | - | - | - |
| Triacetin | - | - | - | 5 | - | - | - | - | - |
| Microcrystalline wax A | - | - | - | - | 5 | - | - | - | - |
| Microcrystalline wax B | - | - | - | - | - | 5 | - | - | - |
| Hydrogenated vegetable oils | - | - | - | - | - | - | 5 | - | - |
| Partially hydrogenated vegetable oils | - | - | - | - | - | - | - | 5 | - |
| Hydrogenated Rapeseed oil | - | - | - | - | - | - | - | - | 5 |

| **Elastomer** | | | | | | | | | |
|---|---|---|---|---|---|---|---|---|---|
| Butyl | 10 | 10 | 10 | 10 | 10 | 10 | 10 | 10 | 10 |

| **Other** | | | | | | | | | |
|---|---|---|---|---|---|---|---|---|---|
| Talc | 5 | 5 | 5 | 5 | 5 | 5 | 5 | 5 | 5 |

**Table 1.4: Encapsulation delivery system**

| **Batch no.** | **227** | **246** | **247** | **248** | **268** | **269** | **270** | **271** | **272** | **273** |
|---|---|---|---|---|---|---|---|---|---|---|
| **Food acid** | | | | | | | | | | |
| Citric acid | 30 | - | - | - | 30 | 30 | 30 | 30 | 30 | 30 |
| Malic acid | | 30 | 30 | - | - | - | - | - | - | - |
| Tataric acid | - | - | - | 30 | - | - | - | - | - | - |

| **Encaps. Material Resin** | | | | | | | | | | |
|---|---|---|---|---|---|---|---|---|---|---|
| PVA (high Mw) | - | - | - | - | - | 26 | - | - | - | - |
| Piccolyte^{®} C115 | 50 | 50 | 50 | 50 | - | 26 | - | - | - | - |
| Hydrogennated resin | - | - | - | - | 52 | - | - | - | - | - |
| Piccolyte^{®} HM 115 | - | - | - | - | - | - | - | 52 | - | - |
| Piccolyte^{®} S 125 | - | - | - | - | - | - | - | - | 52 | - |
| Piccolyte^{®} C135 | - | - | - | - | - | - | - | - | - | 50 |
| Piccolyte^{®} A115 | - | - | - | - | - | - | 52 | - | - | - |

| **Softening system** | | | | | | | | | | |
|---|---|---|---|---|---|---|---|---|---|---|
| Lecithin (Sunflower) | - | - | - | - | 3 | 3 | 3 | 3 | 3 | 5 |
| Hydrogenated vegetable oils | - | 5 | - | 5 | - | - | - | - | - | - |

| Partially | | | | | | | | | | |
|---|---|---|---|---|---|---|---|---|---|---|
| hydrogenated vegetable oils | - | - | - | - | - | - | - | - | - | - |
| Hydrogenated | | | | | | | | | | |
| Rapeseed oil | - | - | 5 | - | - | - | - | - | - | - |
| Acetylated mono-diglycerid | 5 | - | - | - | - | - | - | - | - | - |

| **Elastomer** | | | | | | | | | | |
|---|---|---|---|---|---|---|---|---|---|---|
| Butyl rubber | 10 | 10 | 10 | 10 | 10 | 10 | 10 | 10 | 10 | 10 |

| Other | | | | | | | | | | |
|---|---|---|---|---|---|---|---|---|---|---|
| Talc | 5 | 5 | 5 | 5 | 5 | 5 | 5 | 5 | 5 | 5 |

### EXAMPEL 2

### Preparation of chewing gum compositions

Thirty-three different chewing gum compositions comprising the above described encapsulation delivery systems were prepared, including the standard composition with ground acids. In addition to the different combinations of food acids, encapsulation materials and softening systems, different particle sizes of the encapsulation delivery system were tested.

All chewing gum compositions contained gum base, sorbitol (bulk sweetener), maltitol syrup, aspartame (high intensity sweetener), lemon flavor, and encapsulated acid delivery systems or ground acid.

**Table 2.1: Simple chewing gum composition**

| **Raw material** | **Composition without encap. Acid** | **Composition with encap. Acid** |
|---|---|---|
| | **Content, %** | **Content, %** |
| Gum base | 40 | 40 |
| Sorbitol | 47,23 | 44,9 |
| Maltitol syrup | 10 | 10 |
| Lemon flavour | 1,5 | 1,5 |
| Aspartame | 0,27 | 0,27 |
| Encapsulated food acid | - | 3,33 |
| Food acid | 1 | - |

In the standard composition (reference), i.e. batch 130, 250 and 252, the food acids were added as non-encapsulated, ground food acids, whereas the food acids in the test compositions were added as encapsulated, ground food acid, i.e. encapsulation delivery system. The theoretical amount of food acid In the chewing gum composition was 1% (W/W). In the present context, the theoretical value of 1% (W/W) implies that the overall percentage of food acid is 3.33% (W/W) since the content of acid in the encapsulation is 30% (W/W).

The chewing gum compositions were prepared as follows. The chewing gum components were mixed in kneading kettles (mixers) with strong horizontally placed Z-shaped arms, which processes the raw materials and produces a homogeneous chewing gum mass.

The kneading kettles were heated to a temperature of approx. 45°C. The gum base and the sweetener were mixed for about 6-7 minutes. Subsequently, maltitol syrup were added and mixed, and after that aspartame, lemon flavour and the encapsulated delivery system were added. The admixture was kneaded for 15 minutes.

After the kneading was completed, the chewing gum composition was taken out. After cooling, the chewing gum was formed by rolling and scoring into chewing gum centers (cores).

Tables 2.2 - 2.5 below show the combinations of food acids, particle size of the encapsulation delivery systems, encapsulation materials, and batch no. of the encapsulation delivery system (corresponding to the batch numbers in above tables 1.2 - 1.4) used in 33 different chewing gum compositions.

**Table 2.2: Chewing gum compositions**

| **Batch no. Chewing gum** | **130** | **131** | **162** | **163** | **170** | **171** | **172** | **173** |
|---|---|---|---|---|---|---|---|---|
| **Food acid** | | | | | | | | |
| Citric acid, % | 1,00 | 3,00 | 3,33 | 3,33 | 3,33 | 3,33 | 3,33 | 3,33 |
| **Particle size, micron** | | 500-1000 | 600-1000 | 600-1000 | 600-1000 | 600-1000 | 600-1000 | 600-1000 |
| **Batch no. encapsulation delivery system** | Ref. | 122 | 155 | 156 | 164 | 165 | 166 | 169 |

**Table 2.3: Chewing gum compositions**

| **Batch no. Chewing gum** | **179** | **180** | **218** | **219** | **220** | **221** | **222** | **223** |
|---|---|---|---|---|---|---|---|---|
| **Food acid** | | | | | | | | |
| Citric acid, % | 3,33 | 3,33 | 3,33 | 3,33 | 3,33 | 3,33 | 3,33 | 3,33 |
| **Particle size, micron** | 500-1000 | 500-1000 | 500-1000 | 500-1000 | 500-1000 | 500-1000 | 500-1000 | 500-1000 |
| **Batch no. encapsulation delivery system** | 175 | 176 | 211 | 212 | 213 | 214 | 215 | 216 |

**Table 2.4: Chewing gum compositions**

| **Batch no. Chewing gum** | **228** | **229** | **230** | **231** | **232** | **233** | **250** | **252** |
|---|---|---|---|---|---|---|---|---|
| **Food acid** | | | | | | | | |
| Citric acid, % | 3,33 | 3,33 | 3,33 | 3,33 | 3,33 | 3,33 | | |
| Malic acid, % | | | | | | | 1,00 | |
| Tataric acid | | | | | | | | 1,00 |
| **Particle size, micron** | 180-1000 | 500-1000 | 500-1000 | 500-1000 | 180-1000 | 500-1000 | | |
| **Batch no. encapsulation delivery system** | 224 | 224 | 225 | 226 | 227 | 227 | Ref. | Ref. |

**Table 2.5: Chewing gum compositions**

| **Batch no. Chewing gum** | **253** | **254** | **255** | **276** | **277** | **278** | **279** | **280** | **281** |
|---|---|---|---|---|---|---|---|---|---|
| **Food acid** | | | | | | | | | |
| Citric acid, % | | | | 3,33 | 3,33 | 3,33 | 3,33 | 3,33 | 3,33 |
| Malic acid, % | 3,33 | 3,33 | | | | | | | |
| Tataric acid | | | 3,33 | | | | | | |
| **Particle size, micron** | 500-1000 | 500-1000 | 500-1000 | 500-1000 | 500-1000 | 500-1000 | 500-1000 | 500-1000 | 500-1000 |
| **Batch no encapsulation delivery system** | 246 | 247 | 248 | 268 | 269 | 270 | 271 | 272 | 273 |

### EXAM PLE 3

### Release experiments and analysis

The above chewing gum compositions were examined for release of food acid in vivo. Two healthy, non smoking test persons, chewed one chewing gum composition for 1,3, 6 and 10 minutes. The test persons were not allowed to drink or eat for 10 minutes prior to chewing and during chewing. The test persons were instructed to chew once pr. second and had a watch for their disposal during the chew test. The rest amount of food acid in the chewing gum was quantitatively analyzed by use of HPLC. The percentage release of food acid was calculated.

### EXAMPLE 4

### Effect of softener system

In this example a softening system was incorporated In the encapsulation acid delivery system, in particular to provide a better mouth feel of the final chewing gum.

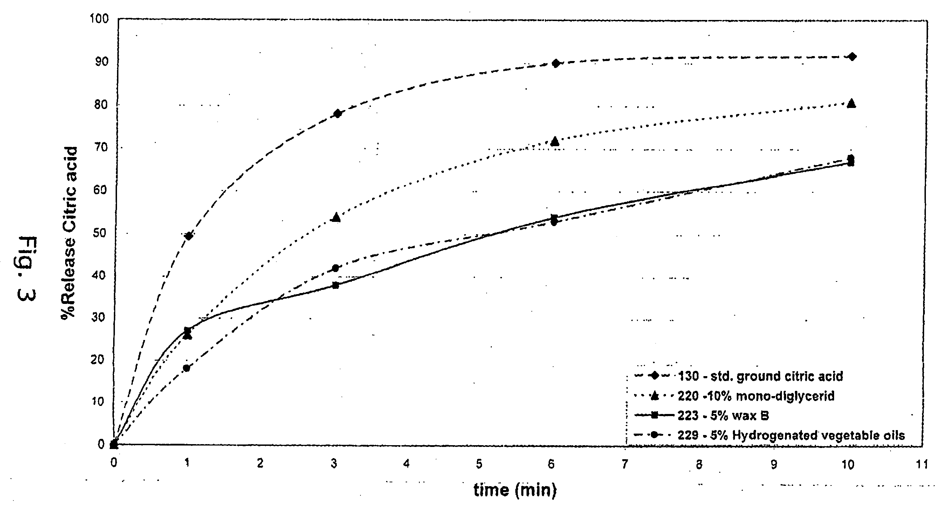

Table 4.1 and Fig. 3 show the effect of different softening systems.

All encapsulations were made with iccolyte^{®} C115 and 10% (W/W) elastomer.

**Table 4.1: In vivo chew out studies, % release of citric acid, different softening system, Plcccolyte^{®}C115. HPLC analysis**

| **Chewing gum** | **Softener** | | | | | |
|---|---|---|---|---|---|---|
| **No.** | **Encapsulated delivery system** | **0 min** | **1min** | **3min** | **6min** | **10min** |
| 130 | Std. ground citric acid | 0 | 49 | 78 | 90 | 92 |
| 218 | 5% Lecithin solid (211) | 0 | 17 | 38 | 58 | 70 |
| 219 | 3% Liquid Lecithin (212) | 0 | 23 | 46 | 63 | 72 |
| 220 | 10% mono-diglyceride (213) | 0 | 26 | 54 | 72 | 81 |
| 221 | 5% Triacetin (214) | 0 | 37 | 52 | 74 | 86 |
| 222 | 5% wax A (215) | 0 | 13 | 38 | 51 | 66 |
| 223 | 5% wax B (216) | 0 | 27 | 38 | 54 | 67 |
| 229 | 5% Hydrogenated vegetable oils (224) | 0 | 18 | 42 | 53 | 68 |
| 230 | 5% Partially Hydrogenated vegetable oils (225) | 0 | 12 | 37 | 64 | 76 |
| 231 | 5% Hydrogenated rapeseed oil (226) | 0 | 25 | 42 | 59 | 69 |
| 233 | 5% Acetylated mono- diglyceride (227) | 0 | 27 | 54 | 70 | 80 |

As disclosed in Tale 4.1 and Fig. 3, the release of food acid is dependent on the softening system. After 6 minutes of chewing, sample no. 222, 223 and 229 (encapsulated delivery system batch no. 215. 216 and 224) released about 50% of the acid whereas the release of acid where mono-diglycerid was present was about 70% after 6 minutes of chewing.

### EXAMPLE 5

### Effect of elastomer

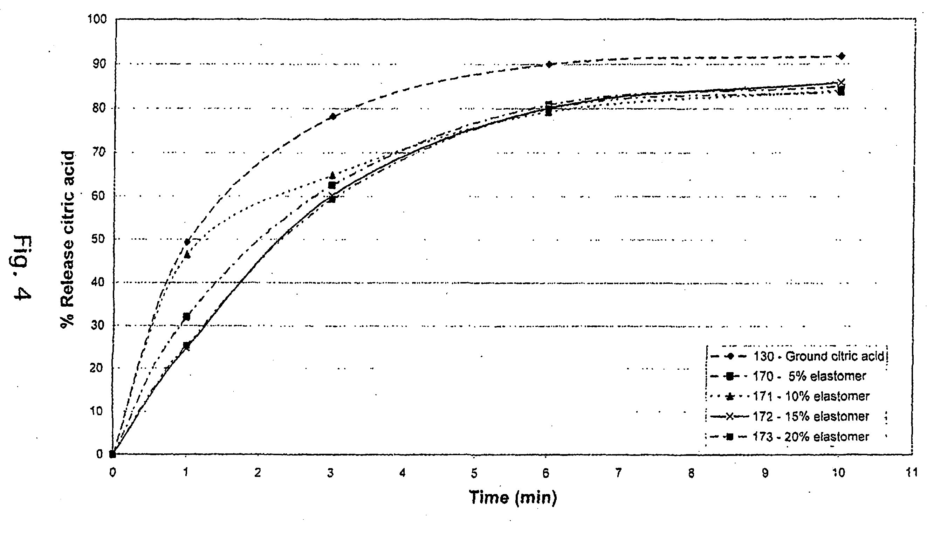

In this example, elastomers were added to the encapsulated food acid delivery system, in particular in order to improve the mouth feel of the final chewing gum. In Table 5.1 and Fig.4, the effects of different amount of elastomers are shown. Piccolyte^{®} C 85 and mono-diglyceride (softening system) was applied in all encapsulation delivery systems.

**Table 5.1: In vivo chew out studies, different amount of elastomer, Piccolyte^{®} C 85**

| **Chewing gum** | | | **Chew out** | | |
|---|---|---|---|---|---|
| **No.** | **0 min** | **1 min** | **3 min** | **6 min** | **10 min** |
| 130 - Ground citric acid | 0 | 49 | 78 | 90 | 92 |
| 170 - 5% elastomer (164) | 0 | 32 | 63 | 81 | 85 |
| 171 - 10% elastomer (165) | 0 | 46 | 65 | 79 | 84 |
| 172 - 15% elastomer (166) | 0 | 25 | 60 | 80 | 86 |
| 173 - 20% elastomer (169) | 0 | 25 | 59 | 80 | 84 |

As disclosed in Table 5.1 and Fig. 4, the amount of elastomer does not seem to play a role for the release of acid from the encapsulation delivery system.

### EXAMPLE 6

### Effect of different polyterpene resins_and resins.

Different types of resins were tested alone or in combination with PVA in the presence of 3-5 % lecithin (softening system).

**Table. 6.1 In vivo chew out studies, %release of citric acid, different resins. HPLC**

| **Chewing gum** | **Chew out min. - HPLC** | | | | |
|---|---|---|---|---|---|
| **No.** | **0 min** | **1 min** | **3 min** | **6 min** | **10 min** |
| 130 - ground citric acid | 0 | 49 | 78 | 90 | 92 |
| 179 - polymeriseret resin (175) | 0 | 34 | 61 | 80 | 89 |
| 180 - PVA high Mw (176) | 0 | 21 | 47 | 70 | 81 |
| 219 - Piccolyte^{®} C115 (212) | 0 | 23 | 46 | 63 | 72 |
| 163 - Piccolyte^{®} C85 (156) | 0 | 24 | 53 | 74 | 84 |
| 276 - Hydrogenated Resin (268) | 0 | 21 | 47 | 64 | 76 |
| 277 - Piccolyte^{®} C115 + PVA 1:1 (269) | 0 | 21 | 34 | 50 | 56 |
| 278 - Piccolyte^{®} A115 (270) | 0 | 37 | 60 | 71 | 77 |
| 279 - Piccolyte^{®} HM 115 (271) | 0 | 34 | 54 | 67 | 75 |
| 280 - Piccolyte^{®} S125 (272) | 0 | 40 | 63 | 81 | 86 |
| 281 - Piccolyte^{®} C135 (273) | 0 | 34 | 52 | 66 | 81 |

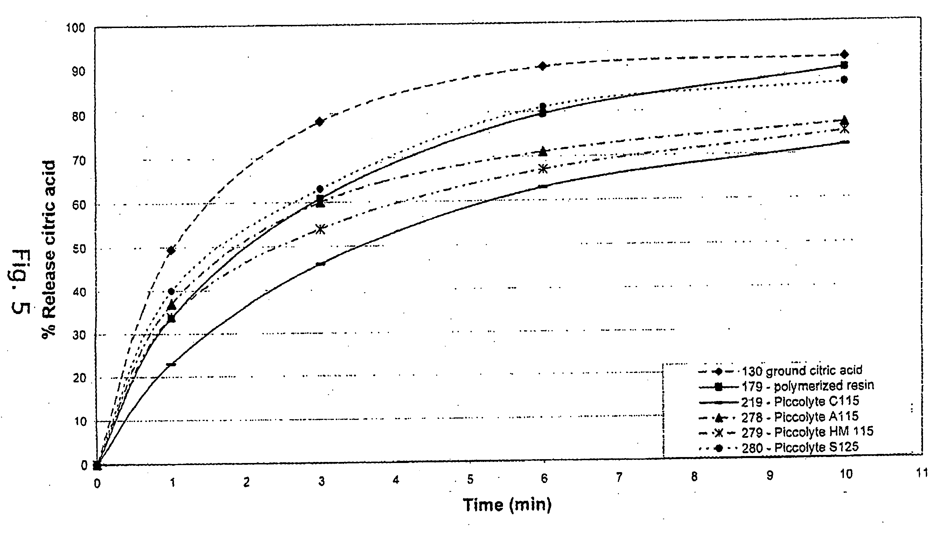

As disclosed in Table 6.1 and Fig. 5, the release of acid is in particular delayed for the combination of PVA with Piccolyte^{®} A115 after 6 and 10 minutes with the particular softening system. The release of acid is furthermore significantly delayed for hydrogenated resin, Piccolyte^{®} C115 and Piccolyte^{®} HM115 after 6 and 10 min with the particular softening system.

### EXAMPLE 7

### Effect of the type of food acid

### 7.1 Malic acid

In this example malic acid was used in the encapsulation. The encapsulation consists of Piccolyte^{®} C115 and, respectively, hydrogenated vegetable oils (Chewing gum 253, encapsulated delivery system 246) and hydrogenated rapeseed oil (chewing gum 254, encapsulated system 247).

### 7.1.1 Chew out studies and HPLC analysis for malic acid.

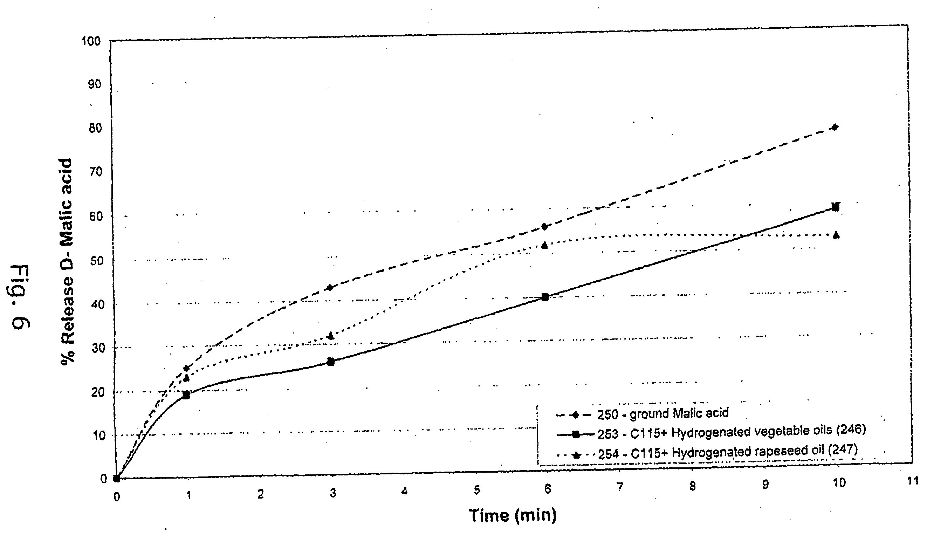

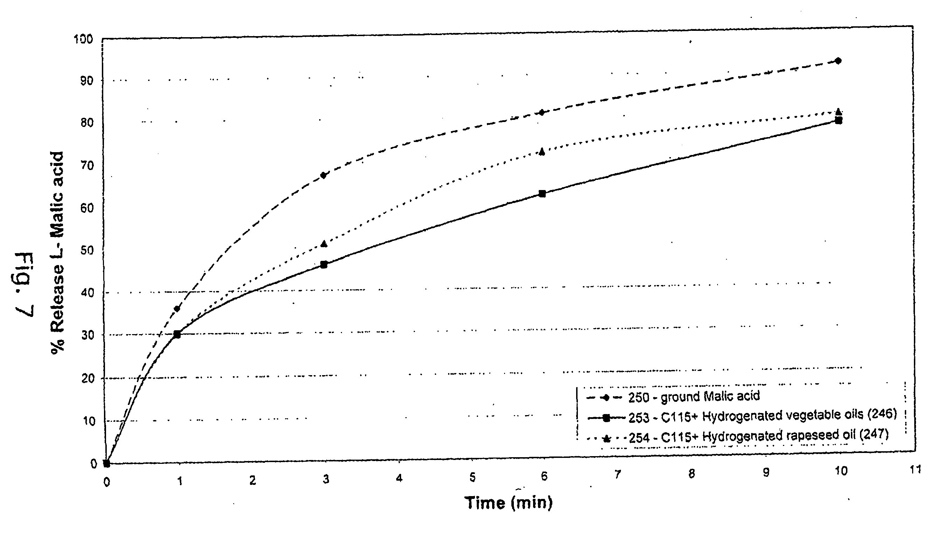

Since malic acid consists of about 60% L-malic acid and about 40% D-malic acid, it is required to measure both L-malic acid and D-malic acid in the HPLC analysis (See D-maleic acid in Fig.6 and L-malic acid in Fig. 7).

By grinding malic acid, a more pronounced delay in release of the acid was obtained correspending roughly to what was seen for citric acid. With regard to D-malic acid, about 40% D-Malic acid was released after 6 minutes and about 60% after 10 minutes. With regard to L- malic acid, about 60% was released after 6 minutes and about 80% after 10 minutes. Weighting both D- and L-malic acid, around 50% malic acid was released after 6 minutes and around 70% malic acid was released after 10 minutes.

### 7.2 Tataric acid

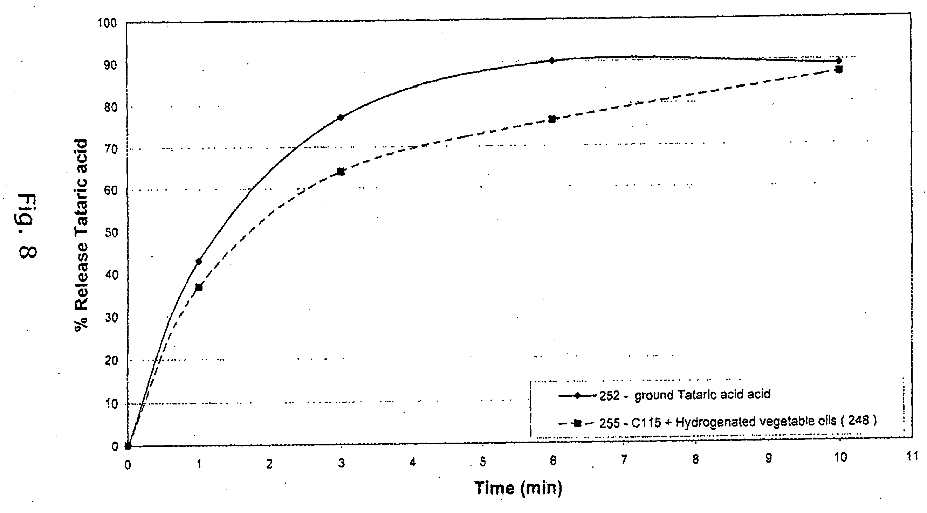

In this example tataric acid was used in the encapsulation. The encapsulation consists of Piccolyte^{®} C115 and hydrogenated vegetable oils (Chewing gum 255, encapsulated delivery system 248). See Fig. 8 for the results.

### 7.2.1 Chew out studies and HPLC analysis for tartaric acid.

A lower release of tataric acid was achieved, corresponding to about 75 % release after 6 minutes and no variation after 10 minutes of chewing.

### EXAMPLE 8

### Effect on particle size

**Table 8.1: % Release citric acid, in vivo chew out studies, with different particle size. HPLC**

| **Sample no. Chewing gum** | **Chew out min** | | | | |
|---|---|---|---|---|---|
| | **0 min** | **1 min** | **3 min** | **6 min** | **10 min** |
| 130 - Citric acid std. | 0 | 49 | 78 | 90 | 92 |
| 228 - Particle size capsules (224) 180-1000 µm | 0 | 25 | 47 | 60 | 72 |
| 229 - Particle size capsules (224) 500-1000 µm | 0 | 18 | 42 | 53 | 68 |
| 232 - Particle size capsules (227) 180-1000 µm | 0 | 26 | 54 | 72 | 82 |
| 233 - Particle size capsules (227) 500-1000 µm | 0 | 27 | 54 | 70 | 80 |

Citric acid matrix for encapsulation consists of Piccolyte^{®} C115 and, respectively, hydrogenated vegetable oils (Chewing gum 228 and 229, encapsulated delivery system 224) and acetylated mono-diglycerld (chewing gum 232 and 233, encapsulated system 227). The capsules from food acid delivery system 224 was 227 was sieved to particle size fraction 180-1000 µm and 500-1000µm and then added to chewing gum sample, see table 8.1.

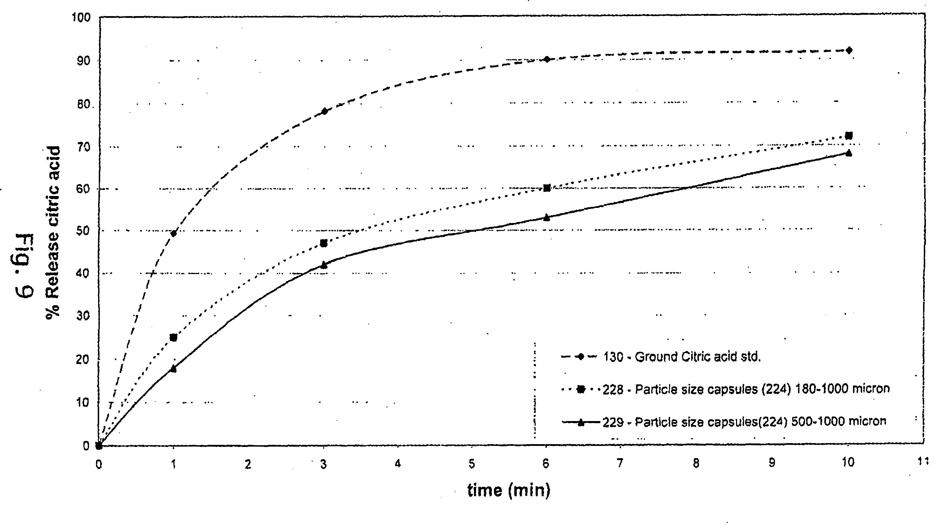

For the softening system with acetylated mono-diglycerid, the particle fraction do not seem to be of significance, but for the softening system with hydrogenated vegetable oil, the particle fraction of 500-1000µm seem to be better (see Fig. 9)

## Claims

1. A chewable confectionary composition having modified release, said composition comprising
- a confectionary base,
- at least one confectionary ingredient, and
- one or more encapsulation delivery systems having modified release of at least one food acid, said encapsulation delivery system comprising at least one food acid and at least one natural resin,
wherein the one or more encapsulation delivery systems comprise a total amount of natural resin in the range of 20-90% by weight.

2. The confectionary composition according to any one of claim 1, wherein the at least one natural resin comprised in the one or more encapsulation delivery systems comprises at least one polyterpene resin.

3. The confectionary composition according to any one of claims 1-2, wherein the at least one natural resin comprised in the one or more encapsulation delivery systems comprises at least one hydrogenated resin.

4. The confectionary composition according to any one of claims 1-3, wherein the at least one natural resin comprised in the one or more encapsulation delivery systems comprises at least one polymerised resin.

5. The confectionary composition according to any one of claims 1-4, wherein the one or more encapsulation delivery systems further comprise at least one elastomer.

6. The confectionary composition according to any one of claims 1-5, wherein the one or more encapsulation delivery systems further comprise a softening system.

7. The confectionary composition according to any one of claims 1-6, wherein the at least one confectionary ingredient comprises at least one food acid.

8. The confectionary composition according to any one of claims 1-7, wherein the one or more encapsulation delivery systems comprise at least one polyterpene resin and at least one hydrogenated resin.

9. The confectionary composition according to any one of claims 1-8, wherein the one or more encapsulation delivery systems comprise at least one polyterpene resin and at least one polymerised resin.

10. The confectionary composition according to any one of claims 1-9, wherein the one or more encapsulation delivery systems further comprise at least one polyvinyl acetate.

11. The confectionary composition according to any one of claims 6-10, wherein the softening system comprised in the one or more encapsulation delivery systems comprises an emulsifier.

12. The confectionary composition according to claim 11, wherein the softening system comprised in the one or more encapsulation delivery systems comprises a wax.

13. The confectionary composition according to claim 11, wherein the softening system comprised in the one or more encapsulation delivery systems comprises a fat.

14. The confectionary composition according to any one of claims 1-13, wherein the confectionary composition is in the form of a chewing gum, a toffee, a caramel, a gummy candy, or a jelly candy.

## Patentansprüche

1. Kaubare Konfektzusammensetzung mit einer modifizierten Freisetzung, wobei die Zusammensetzung Folgendes umfasst:
- eine Konfektgrundlage,
- mindestens einen Konfektbestandteil, und
- ein oder mehrere Verkapselungs-Abgabesysteme mit einer modifizierten Freigabe von mindestens einer Nahrungsmittelsäure, wobei das Verkapselungs-Abgabesystem mindestens eine Nahrungsmittelsäure und mindestens ein natürliches Harz umfasst,
wobei das eine oder die mehreren Verkapselungs-Abgabesysteme eine gesamte Menge von natürlichem Harz im Bereich von 20 - 90 Gew.% umfassen.

2. Konfektzusammensetzung nach Anspruch 1, wobei das mindestens eine natürliche Harz, das in dem einen oder in den mehreren Verkapselungs-Abgabesystemen enthalten ist, mindestens ein Polyterpenharz umfasst.

3. Konfektzusammensetzung nach einem der Ansprüche 1 - 2, wobei das mindestens eine natürliche Harz, das in dem einen oder in den mehreren Verkapselungs-Abgabesystemen enthalten ist, mindestens ein hydriertes Harz umfasst.

4. Konfektzusammensetzung nach einem der Ansprüche 1- 3, wobei das mindestens eine natürliche Harz, das in dem einen oder in den mehreren Verkapselungs-Abgabesystemen enthalten ist, mindestens ein polymerisiertes Harz umfasst.

5. Konfektzusammensetzung nach einem der Ansprüche 1 - 4, wobei das eine oder die mehreren Verkapselungs-Abgabesysteme weiter mindestens ein Elastomer umfassen.

6. Konfektzusammensetzung nach einem der Ansprüche 1 - 5, wobei das eine oder die mehreren Verkapselungs-Abgabesysteme weiter ein Enthärtungssystem umfassen.

7. Konfektzusammensetzung nach einem der Ansprüche 1 - 6, wobei der mindestens eine Konfektbestandteil mindestens eine Nahrungsmittelsäure umfasst.

8. Konfektzusammensetzung nach einem der Ansprüche 1 - 7, wobei das eine oder die mehreren Verkapselungs-Abgabesysteme mindestens ein Polyterpenharz und mindestens ein hydriertes Harz umfassen.

9. Konfektzusammensetzung nach einem der Ansprüche 1 - 8, wobei das eine oder die mehreren Verkapselungs-Abgabesysteme mindestens ein Polyterpenharz und mindestens ein polymerisiertes Harz umfassen.

10. Konfektzusammensetzung nach einem der Ansprüche 1 - 9, wobei das eine oder die mehreren Verkapselungs-Abgabesysteme weiter mindestens ein Polyvinylacetat umfassen.

11. Konfektzusammensetzung nach einem der Ansprüche 6 - 10, wobei das Enthärtungssystem, das in dem einen oder in den mehreren Verkapselungs-Abgabesystemen enthalten ist, einen Emulgator umfasst.

12. Konfektzusammensetzung nach Anspruch 11, wobei das Enthärtungssystem, das in dem einen oder in den mehreren Verkapselungs-Abgabesystemen enthalten ist, ein Wachs umfasst.

13. Konfektzusammensetzung nach Anspruch 11, wobei das Enthärtungssystem, das in dem einen oder in den mehreren Verkapselungs-Abgabesystemen enthalten ist, ein Fett umfasst.

14. Konfektzusammensetzung nach einem der Ansprüche 1 - 13, wobei die Konfektzusammensetzung die Form eines Kaugummis, eines Toffees, eines Karamells, eines Fruchtgummis oder eines Geleebonbons aufweist.

## Revendications

1. Composition de confiserie à mâcher ayant une libération modifiée, comprenant
- une base de confiserie,
- au moins un ingrédient de confiserie, et
- au moins un ou plusieurs systèmes d'encapsulation ayant une libération modifiée d'au moins un acide alimentaire, ledit système de distribution par encapsulation comprenant au moins un acide alimentaire et au moins une résine naturelle,
dans laquelle l'un ou plusieurs des systèmes de distribution par encapsulation comprennent une quantité totale d'une résine naturelle de l'ordre de 20 à 90% en poids.

2. Composition de confiserie selon la revendication 1, dans laquelle au moins une résine naturelle comprise dans l'un ou plusieurs des systèmes de distribution par encapsulation comprend au moins une résine de polyterpène.

3. Composition de confiserie selon l'une quelconque des revendications 1 à 2, dans laquelle au moins une résine naturelle comprise dans l'un ou plusieurs des systèmes de distribution par encapsulation comprend au moins une résine hydrogénée.

4. Composition de confiserie selon l'une quelconque des revendications 1 à 3, dans laquelle au moins une résine naturelle comprise dans l'un ou plusieurs des systèmes de distribution par encapsulation comprend au moins une résine polymérisée.

5. Composition de confiserie selon l'une quelconque des revendications 1 à 4, dans laquelle l'un ou plusieurs des systèmes de distribution par encapsulation comprennent en outre au moins un élastomère.

6. Composition de confiserie selon l'une quelconque des revendications 1 à 5, dans laquelle l'un ou plusieurs des systèmes de distribution par encapsulation comprennent en outre un système assouplissant.

7. Composition de confiserie selon l'une quelconque des revendications 1 à 6, dans laquelle au moins un ingrédient de confiserie comprend au moins un acide alimentaire.

8. Composition de confiserie selon l'une quelconque des revendications 1 à 7, dans laquelle l'un ou plusieurs des systèmes de distribution par encapsulation comprennent au moins une résine de polyterpène et au moins une résine hydrogénée.

9. Composition de confiserie selon l'une quelconque des revendications 1 à 8, dans laquelle l'un ou plusieurs des systèmes de distribution par encapsulation comprennent au moins une résine de polyterpène et au moins une résine polymérisée.

10. Composition de confiserie selon l'une quelconque des revendications 1 à 9, dans laquelle l'un ou plusieurs des systèmes de distribution par encapsulation comprennent au moins un acétate de polyvinyle.

11. Composition de confiserie selon l'une quelconque des revendications 6 à 10, dans laquelle le système assouplissant compris dans l'un ou plusieurs des systèmes de distribution par encapsulation comprend un émulsifiant.

12. Composition de confiserie selon la revendication 11, dans laquelle le système assouplissant compris dans l'un ou plusieurs des systèmes de distribution par encapsulation comprend une cire.

13. Composition de confiserie selon la revendication 11, dans laquelle le système assouplissant compris dans l'un ou plusieurs des systèmes de distribution par encapsulation comprend une graisse.

14. Composition de confiserie selon l'une quelconque des revendications 1 à 13, dans laquelle la composition de confiserie se présente sous la forme d'un chewing-gum, d'un toffee, d'un caramel, d'un bonbon gomme ou d'un bonbon gélifié.
